# EUROPÄISCHE PATENTSCHRIFT

(11) **EP 0 291 135 B1**
(45) Veröffentlichungstag und Bekanntmachung des Hinweises auf die Patenterteilung: **17.08.1994**
(21) Anmeldenummer: 88200944.2
(22) Anmeldetag: 11.05.1988
(51) Int. Cl.: H04Q 11/04, H04Q 3/60

(54) **Vorfeldeinrichtung für ein Breitband-Vermittlungssystem**
Concentrator stage for a broadband switching network
Etage de concentration pour un système de commutation à large bande

(30) Priorität: 13.05.1987 DE 3715885
(43) Veröffentlichungstag der Anmeldung: 17.11.1988
(73) Patentinhaber: Philips Patentverwaltung GmbH, 22335 Hamburg (DE); Philips Electronics N.V., 5621 BA Eindhoven (NL)
(72) Erfinder: Jasmer, Wolfgang, Ing. grad., D-2000 Hamburg 61 (DE); Krüger, Johann, Dipl.-Ing., D-2085 Quickborn (DE); Killat, Ulrich, Dr., D-2000 Hamburg 56 (DE)
(74) Vertreter: Peuckert, Hermann, Dipl.-Ing.

(56) Entgegenhaltungen:
- EP-A- 0 196 527
- TRANSACTIONS OF THE I.E.C.E. OF JAPAN, Band E68, Nr. 9, September 1985, Seiten 570-571, Tokyo, JP; N. YAMANAKA et al.: "High-speed time division switch operating at 256Mb/s"
- ICC'86 - INTERNATIONAL SWITCHING SYMPOSIUM, Montreal, 21.-25. September 1981, Session 42C, Paper 1, Seiten 1-6; M. BURMEISTER et al.: "Line concentrators for an experimental digital wideband network with decentralized switching"
- IEEE INTERNATIONAL CONFERENCE ON COMMUNICATIONS'86, Toronto, 22.-25. Juni 1986, Band 2, Paper 24.6, Seiten 766-770, IEEE, New York, US; K.A. LUTZ:"Implementation of broadband ISDN with the Siemens switching system EWSD"

## Beschreibung

Die Erfindung betrifft eine Vorfeldeinrichtung für ein Breitband-Vermittlungssystem mit einem Breitband-Koppelfeld und mehreren Teilnehmergruppen-Schaltungen, bestehend aus wenigstens einem Breitband-Konzentrator
Eine ausgedehnte Zeitvielfach-Vermittlungseinrichtung besteht häufig aus einem zentralen Koppelfeld und einer Reihe von sogenannten Konzentratoren, die an die Ein-Ausgänge des zentralen Koppelfelds angeschlossen sind. Der Konzentrator ist eine Vorfeldeinrichtung, die eine Verkehrskonzentration des angebotenen Verkehrs vornimmt. Für die am Konzentrator angeschlossenen Teilnehmereinrichtungen tritt ein im Mittel von Null verschiedener Verlust auf. Die Zahl der Verbindungsleitungen zwischen Konzentrator und Vermittlungseinrichtung ist dabei so zu bemessen, daß die Abwicklung des durch die am Konzentrator angeschlossenen Teilnehmereinrichtungen angebotenen Verkehrs nur unwesentlich beeinträchtigt wird. Das bedeutet in der Praxis, daß die Anzahl der an den Konzentrator anzuschließenden Teilnehmereinrichtungen bei vorgegebenem Verlust eine bestimmte Schranke nicht überschreiten darf.

Für die über den Konzentrator angeschlossenen Teilnehmereinrichtungen ist es ungünstig, daß eine Beschaltung des Konzentrators mit Leitungen unterschiedlichen Verkehrsaufkommens negative Auswirkungen auf die Dienstgüte hat. Es wird deshalb häufig eine Systemstruktur konzipiert, bei der eine Trennung der Vermittlungseinrichtung, insbesondere bei einer B-ISDN-Vermittlungsanlage, in einen Schmalband- und einen Breitbandteil vorgenommen ist. Beide Teile bestehen dabei aus dem zentralen Koppelfeld mit vorgeschalteten Konzentratoren. In der Vermittlungseinrichtung ist eine gemeinsame Steuereinrichtung vorgesehen, welche über eine entsprechende Schnittstellenschaltung die Konzentratoren mit Einstell- und Kontrollinformationen versorgt.

Aus Nachrichtentechnik-Elektronik, 1985, Heft 2, Seiten 43 bis 44 ist eine modular aufgebaute digitale Vermittlungszentrale mit verteilter Steuerung zur Durchschaltung von Schmalbandkanälen bekannt. Für unterschiedliche Anwendungen weist die digitale Vermittlungszentrale verschiedene Modultypen, z.B. Transitmodule und Konzentratormodule, auf. Diese Vorfeldeinrichtungen kommunizieren über einen zeitgeteilt arbeitenden zentralen Bus miteinander, wobei die Kommunikationsdaten nach dem Prinzip der Speicherkopplung zwischen den Modulen übertragen werden und die Prozeßdaten im Rahmen der Sprachinformationsübertragung in den jeweiligen Zeitschlitzen parallel über den Prozeßbus übertragen werden.

Das Konzentratormodul weist eine Konzentratorstufe, eine Mikrorechnersteuerung, eine Anschalteinheit, einen Zeit-Richtungs-Koppler und ein Businterface auf.

Die Übertragung einer solchen Systemstruktur auf eine B-ISDN-Vermittlungsanlage erfordert einen hohen Aufwand in den Konzentratoren insbesondere deshalb, weil jeder der Konzentratoren eine eigene Mikrorechnersteuerung aufweist, welche zum Durchschalten der Verbindungen über das zeitgeteilt arbeitende Bussystem miteinander kommunizieren müssen.

Für eine H1-Vermittlung ist deshalb, wie bereits vorstehend ausgeführt worden ist, ein zentrales Breitband-Koppelfeld für beispielsweise 1024 2Mbit/s-Kanäle vorzusehen, an welches beispielsweise bis zu 16 Breitband-Konzentratoren angeschlossen werden können.

Die Breitband-Konzentratoren führen dabei keine Internvermittlung durch, d.h. ohne Hilfe des zentralen Breitband-Koppelfelds erfolgt keine Vermittlung zwischen den angeschlossenen Teilnehmergruppen. Alle Daten, die einen Breitband-Konzentrator auf einem Highway H1 (H2) erreichen, verlassen diesen wieder auf einem Highway H2 (H1).

Ein Highway H ist eine bidirektionale Multiplexverbindung, über welche jeweils N-Kanäle transportiert werden. Beispielsweise beträgt die Übertragungsrate der Verbindungsstrecke zwischen zentralem Breitband-Koppelfeld und Breitband-Konzentrator 139,264 Mbit/s bei einem Worttakt von 17,408 MHz. Dies entspricht einem Multiplexrahmen von 68 Zeitschlitzen von jeweils 2,048 Mbit/s, wobei im vorliegenden Anwendungsfall nur 64 Zeitschlitze vermittelbar sind. Die restlichen vier Zeitschlitze werden über die Steuerschnittstellenschaltung zu Sonderzwecken erreicht. Der Multiplexrahmen auf der Teilnehmergruppenleitung besitzt beispielsweise 34 Zeitschlitze. Hiervon werden jedem Teilnehmer 4 H1-Kanäle für Breitband und 1/8 H₁ (gleich 256 kbit/s) für Schmalband zugeteilt, wobei die Taktsynchronisation beider Systeme zentral über einen gemeinsamen Takt, die Vermittlung von Schmalband- und Breitband-Daten-Kanälen dagegen vollkommen getrennt erfolgt.

Bei der vorstehend geschilderten Systemstruktur enthält jeder Konzentrator 16 Konzentrator-Zeitstufen-Baugruppen, welche jeweils einer Gruppe von 8 Teilnehmern zugeordnet sind. Der Konzentrationsfaktor ist dabei 8. Entsprechend dem aus der DE-OS 35 37 451 bekannten (4,2)-Konzept werden je Zeitschlitz vier Datenbits parallel und bidirektional übertragen.

Jede Konzentrator-Zeitstufen-Baugruppe enthält dabei vier bidirektionale Zeitstufen zum Schalten von 34 2 Mbit/s-Kanälen, wodurch bei der vorstehend geschilderten Systemstruktur die Vermittlung von 8*(4H1)-Kanälen einer Gruppe (sowie zweier, die Schmalband-Kanäle bündelnder 2 Mbit/s-Kanäle) auf die 68 Kanäle, die in einem Zeitmultiplex-Rahmen zur Verfügung stehen, ermöglicht ist.

Aus der EP-A-0196527 ist noch eine Verteilvorrichtung für digitalisierte Fernsehsignale bekannt, die ein breitbandiges Koppelfeld, Teilnehmeranschlußeinheiten, einen Konzentrator und weitere Schaltungselemente enthält. Der Konzentrator bündelt die von einem Fernleitungsbündel kommenden Bildferngespräche und die von weiteren Bildfernsprechteilnehmern kommenden Daten und führt sie dem breitbandigen Koppelfeld zu. Wie ein solcher Konzentrator ausgeführt ist, ist aus der Anmeldung nicht zu entnehmen.

Der Erfindung liegt daher die Aufgabe zugrunde, eine Vorfeldeinrichtung derart zu gestalten, daß ein Verteildienst in Richtung der Teilnehmer ermöglicht wird.

Weiterhin soll eine Überwachung der Vorfeldeinrichtung während des Betriebs vorgenommen werden können, sowie die Taktsynchronisation der vier bidirektionalen Zeitstufen jeder Konzentrator-Zeitstufen-Baugruppe sichergestellt sein.

Diese Aufgabe wird erfindungsgemäß durch eine Vorfeldeinrichtung mit den Merkmalen des Patentanspruchs 1 gelöst.

Die erfindungsgemäße Vorfeldeinrichtung für ein Breitband-Vermittlungssystem enthält einen Breitband-Konzentrator mit einer Schnittstellenschaltung, ein internes Bussystem und Konzentrator-Module. Das interne Bussystem übermittelt die Daten zwischen der mit einem Breitband-Koppelfeld gekoppelten Schnittstellenschaltung und den Konzentrator-Modulen. Außerdem liefert das interne Bussystem verschiedene Takte. Ein Konzentrator-Modul führt eine Anpassung des Taktes zwischen internem Bussystem und dem abgehenden Takt, beispielsweise zu einer Teilnehmergruppen-Schaltung durch. Die in einer im Konzentrator-Modul enthaltenen Speicherbank eingeschriebenen Daten können mehrfach ausgelesen und beispielsweise auf verschiedene Teilnehmergruppen-Schaltungen verteilt oder auch in unterschiedliche Zeitschlitze eines Signales an eine Teilnehmergruppen-Schaltung gegeben werden. Auch Daten, die empfangen werden, werden über eine Speicherbank zum internen Bussystem gegeben. Hierbei findet ebenfalls eine Taktanpassung statt.

Die Vorfeldeinrichtung weist den Vorteil auf, daß auf überraschend einfache Art und Weise mittels einer Schnittstellenschaltung eine Signalaufbereitung der vom zentralen Breitband-Koppelfeld kommenden Bit- und Rahmentakte wie Datensignale vorgenommen werden kann. Weiterhin ist von Vorteil, daß infolge des modularen Aufbaus der Breitband-Konzentratoren bereits eine Vorleistung dahingehend erbracht worden ist, daß bei Ausfall eines der Module ein einfacher und schneller Austausch dieses Moduls vorgenommen werden kann. Wird das interne Bussystem als serieller Bus ausgestaltet, so kann zur Störunterdrückung dieser symmetrisch ausgelegt werden und es wird eine geringe Anzahl von Leitungen benötigt.

Das Einschreiben und Auslesen der Daten in bzw. aus einer Speicherbank wird folgendermaßen durchgeführt. Die eine Speicherbank ist zum zähleradressierten Einschreiben der Daten vom internen Bussystem mit einem Takt und eine Steuerschaltung im Konzentrator-Modul zum adressierten Auslesen der Daten der einen Speicherbank mit einem um einen geradzahligen Faktor untersetzten Takt vorgesehen. Weiter ist die Steuerschaltung zum adressierten Einschreiben der Daten in die andere Speicherbank mit dem um den geradzahligen Faktor untersetzen Takt und die andere Speicherbank zum zähleradressierten Auslesen der Daten zum internen Bussystem mit dem Takt vorgesehen.

Durch die Dopplung der Speicherbänke wird eine erhöhte Betriebssicherheit erreicht.

Durch eine Ausgestaltung der Vorfeldeinrichtung gemäß Patentanspruch 4 kann auf einfache Art und Weise verhindert werden, daß mehrere Konzentrator-Module gleichzeitig auf das interne Bussystem zugreifen.

Mit einer Ausgestaltung der Vorfeldeinrichtung gemäß Patentanspruch 5 können von dem zentralen Breitband-Koppelfeld kommende Daten zurückvermittelt werden, so daß eine ferngesteuerte Überwachung der Vorfeldeinrichtung während des Betriebs ermöglicht wird.

Durch die Anordnung eines elastischen Speichers gemäß Patentanspruch 6 wird auf einfache Art und Weise auch bei unterschiedlichen Verbindungslängen zwischen zentralen Breitband-Koppelfeld und Breitband-Konzentrator die Rahmensynchronität von hin- und rücklaufenden Daten sichergestellt.

Die Ausgestaltung der Vorfeldeinrichtung gemäß Patentanspruch 7 weist den Vorteil auf, daß auch Mittel der optischen Nachrichtenübertragungstechnik eingesetzt werden können. Die Überwachung der Lichtleiter auf Leitungsbruch kann durch die Übertragung des Freizeichens ermöglicht werden.

Wird gemäß Patentanspruch 8 zwischen den beiden Speicherbänken ein Verzögerungsglied angeordnet, so wird auf einfache Art und Weise die Störung von bereits vermittelten Daten während einer neuen Vermittlung ausgeschlossen.

Durch die Ausgestaltung der Vorfeldeinrichtung gemäß Patentanspruch 10 wird auch die Übertragungsstrecke zwischen zentralem Breitband-Koppelfeld und Breitband-Konzentrator geschützt und eine Fehlerkorrektur kann auf einfache Art und Weise vorgenommen werden. Infolge des Vorsehens des (n, k)-Konzepts in den Breitband-Konzentratoren kann zur Reparatur das defekte Konzentrator-Modul ohne Abschalten der Vorfeldeinrichtung ausgetauscht werden.

Durch die Ausgestaltung der Vorfeldeinrichtung gemäß Patentanspruch 12 wird im Hinblick auf das angewandte (n, k)-Konzept eine exakte Taktsynchronisierung auf einfache Art und Weise sichergestellt.

Weitere Ausgestaltungen der erfindungsgemäßen Vorfeldeinrichtung sind in weiteren Patentansprüchen angegeben.

Die Erfindung wird im folgenden anhand verschiedener, in der Zeichnung dargestellter Ausführungsformen näher beschrieben und erläutert.

Es zeigt:
- Fig. 1: die Struktur einer B-ISDN-Vermittlungsanlage,
- Fig. 2: eine Ausführungsform der Breitband-Konzentratorstruktur
- Fig. 3: eine Ausführungsform eines Konzentrator-Moduls,
- Fig. 4: eine weitere Ausführungsform eines nach dem (4,2)-Konzept ausgestalteten Breitband-Konzentrators und
- Fig. 5: eine Ausführungsform zur Durchführung der Taktsynchronisation in der erfindungsgemäßen Vorfeldeinrichtung.

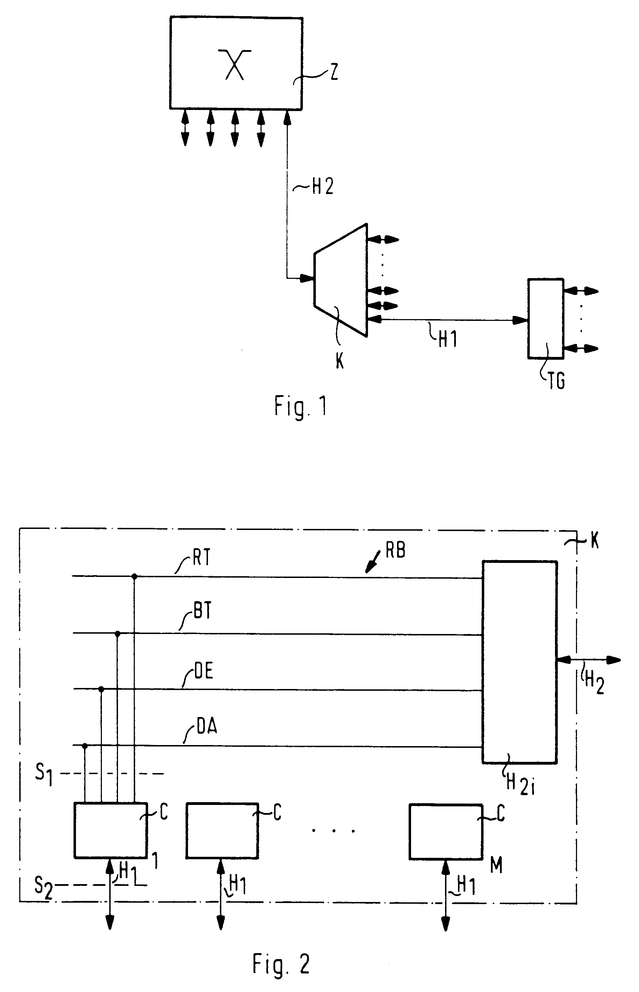

Bei der in Fig. 1 dargestellten Struktur einer B-ISDN-Vermittlungsanlage wird davon ausgegangen, daß nur ein Highway H2 pro Breitband-Konzentrator K existiert. Die erfindungsgemäße Vorfeldeinrichtung kann wie folgt charakterisiert werden:
- es können M Highways H1 (M = 16) angeschlossen werden.
- die Anzahl N1 der Zeitschlitze auf einem Highway H1 ist ein (vorzugsweise ganzzahliger) Teiler der Anzahl N2 der Zeitschlitze auf dem Highway H2 (N1 = 34; N2 = 68).
- Der Breitband-Konzentrator K, der für Hin- und Rückrichtung einer bidirektionalen Verbindung die gleiche Zeitschlitznummer verwendet, kann die Verbindung derart auftrennen, daß die über den Highway H1 (H2) kommenden Daten zur Quelle zurückgeschleift werden
- Kanäle, die über den Highway H2 kommen, können im Sinne einer Verteilvermittlung auf mehrere Kanäle in allen Highways geschaltet werden.
- in einem nichtvermittelten Kanal empfängt der Teilnehmer ein bestimmtes Freizeichen.
- der Breitband-Konzentrator ist modular aufgebaut und enthält M den einzelnen Highways H1 zugeordnete Konzentrator-Module C.
- der Breitband-Konzentrator K kann auf einfache Art und Weise fehlertolerant nach dem bekannten (4,2)-Konzept ausgeführt werden.

Bei der in Fig. 1 dargestellten Struktur sind für das Verständnis der Erfindung nicht erforderliche Einrichtungen, insbesondere in der Vermittlungseinrichtung nicht dargestellt, sondern in Richtung der Fernebene ist lediglich das zentrale Breitband-Koppelfeld Z und in Richtung der Teilnehmer die Teilnehmergruppen-Schaltung TG dargestellt.

Fig. 2 zeigt eine Ausführungsform des erfindungsgemäßen Breitband-Konzentrators K. Der Breitband-Konzentrator K ist aus M gleichen Konzentrator-Modulen C sowie einer Schnittstellenschaltung H2i aufgebaut. Die Schnittstellenschaltung H2i bildet das Interface zwischen dem Highway H2 und dem internen Bussystem RB, über dessen Leitungen der Rahmentakt RT, Bittakt BT sowie Dateneingang DE und Datenausgang DA zur Verfügung gestellt werden. Ein Konzentrator-Modul C bedient einen Highway H1 und ist von der Aufbautechnik her gesehen vorzugweise als eine Platine ausgeführt. In diesem Fall ist der Breitband-Konzentrator K durch einen Einschub mit einer Rückwandverdrahtung und mindestens M+1 Steckplätzen gekennzeichnet. Durch S₁ und S₂ sind die Schnittstellen zum internen Bussystem RB bzw. zum Highway H1 gekennzeichnet.

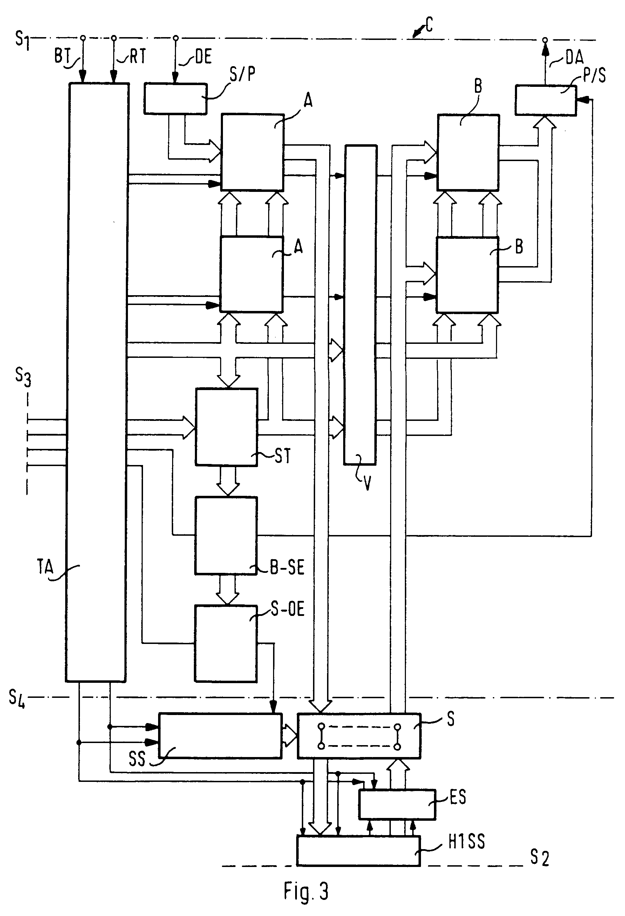

Die Funktion des Konzentrator-Moduls C wird im folgenden anhand Fig. 3 näher beschrieben und erläutert. Das Konzentrator-Modul C weist, wie vorstehend ausgeführt, die Schnittstellen S₁, S₂ und eine Steuerschnittstelle S₃ zur Aufnahme der vom zentralen Breitband-Koppelfeld Z kommenden Stellinformation auf.

Der Datentransfer von der Schnittstelle S₁ nach der Schnittstelle S₂ erfolgt über eine Speicherbank A und in Gegenrichtung über die Speicherbank B. Die Speicherbänke A, B sind gedoppelt ausgeführt und wechselnd mit jeder Rahmenperiode wird nur in einen Teil der Speicherbänke A bzw. B geschrieben, während im anderen Teil nur gelesen wird. Hierdurch wird vermieden, daß die Schreib- und Lesetakte (bedingt durch ein ungünstiges Verhältnis von N₂:N₁) den gleichzeitigen schreibenden und lesenden Zugriff auf eine Speicherzelle bewirken. Die von der Schnittstelle S₁ kommenden Daten (N₂ z.B. 68 Zeitschlitze (typischerweise) 8 bit) werden zähleradressiert eingeschrieben und mit einem um den Faktor N₂/N₁ untersetzten Takt durch eine im Konzentrator-Modul C angeordnete Steuerschaltung ST adressiert ausgelesen.

Die auf diese Art und Weise realisierte Vermittlungsfunktion in der Richtung von der Schnittstelle S₁ zur Schnittstelle S₂ ermöglicht, da die kommenden Daten in der Speicherbank A zwischengespeichert werden, eine Verteil-Vermittlung, d.h. derselbe Speicherinhalt kann nach Maßgabe der Steuerschaltung ST mehrfach ausgelesen werden. In der Gegenrichtung, d.h. von der Schnittstelle S₂ zur Schnittstelle S₁, wird zähleradressiert ausgelesen, was zuvor durch die Steuerschaltung ST adressiert eingeschrieben wurde. Da beide Speicherbänke A, B mit dem gleichen Steuerinhalt von der Steuerschaltung ST adressiert werden, entsteht eine Paarung identischer Zeitschlitznummern für beide Richtungen einer bidirektionalen Verbindung.

Da mehrere Konzentratormodule C auf das interne Bussystem RB zugreifen, dürfen nur die vermittelten Speicherplätze eines Moduls C auf die Busleitung DA gegeben werden. Hierzu ist im Konzentrator-Modul C eine Bus-Zugriffschaltung B-SE angeordnet, in welcher für den entsprechenden Speicherplatz (Zeitschlitz) ein Signal mit Logisch-1-Pegel eingetragen wird. Speicherplätze, welche derzeit nicht für einen Vermittlungsvorgang verwendet werden -und hierzu zählen auch Verteilvermittlungsverbindungen, welche nicht bidirektional sind - werden von der Bus-Zugriffsschaltung B-SE durch einen Logisch-0-Pegel gekennzeichnet.

Einer der kommenden Zeitschlitze, z.B. jener mit der Adresse 0, enthält ein Freizeichen. Dieses Freizeichen wird den Teilnehmern für alle ausgelösten Verbindungen im Sinne einer Verteilvermittlung übertragen. Für den Teilnehmer gibt es somit keinen "toten" (informationslosen) Kanal und insbesondere bei Verwendung von Lichtleitern kann auf einfache Art und Weise ein Leitungsbruch erkannt werden.

Im Konzentrator-Modul C ist weiterhin eine Schleifenschaltung S-OE angeordnet, welche einen mit den zwei Speicherbänken A, B verbundenen Schalter S steuert. Mit Hilfe der Schleifenschaltung S-OE kann für jeden vermittelten Zeitschlitz der Schalter S in eine von zwei Stellungen gebracht werden:
- Durchschaltung d.h. Verbindung in Richtung von der Schnittstelle S₁ zur Schnittstelle S₂.
- Auftrennen der Verbindung und Zurückschleifen der Daten zur jeweiligen Quelle.

Werden die Daten zurückgeschleift, so sind die Steuersignale für die Speicherbank A um den gleichen Betrag zu verzögern, wie die Daten auf ihrem Weg durch den Schalter S. Hierzu ist zwischen den Speicherbänken A, B ein Verzögerungsglied V angeordnet, welches vorzugsweise durch eine Kette von D-Flip-Flops realisiert wird. Die Phasenbedingungen für den Rahmentakt am Schalter S kann in der anderen Schalterstellung (Durchschaltung) auch den von der Schnittstelle S₂ kommenden Daten aufgezwungen werden. Hierzu ist eine Pufferung von max. einem Rahmen erforderlich.

Weiterhin weist das Konzentrator-Modul C für abgehende und ankommende Daten auf der Verbindungsleitung zum zentralen Breitband-Koppelfeld einen Serien-Parallel-Wandler S/P und einen Parallel/Serien-Wandler P/S auf. Die über die Steuerschnittstelle S₃ ankommende Stellinformation für das Konzentrator-Modul C wird einer Taktaufbereitung TA zugeführt, welcher weiterhin der Bittakt BT und der Rahmentakt RT zugeführt werden. Die Taktaufbereitung TA leitet die aufbereiteten Signale zu den jeweiligen Einrichtungen des Konzentrator-Moduls C weiter. Zur Steuerung des Schalters S kann weiterhin im Konzentrator-Modul C eine mit der Schleifenschaltung S-OE und der Taktaufbereitung TA verbundenen Steuerung SS angeordnet werden. Bei einer solchen Ausgestaltung ist die Schleifenschaltung S-OE als Speicher ausgebildet, in welchem die über die Steuerschnittstelle S₃ und Taktaufbereitung TA kommenden Signale abgespeichert werden.

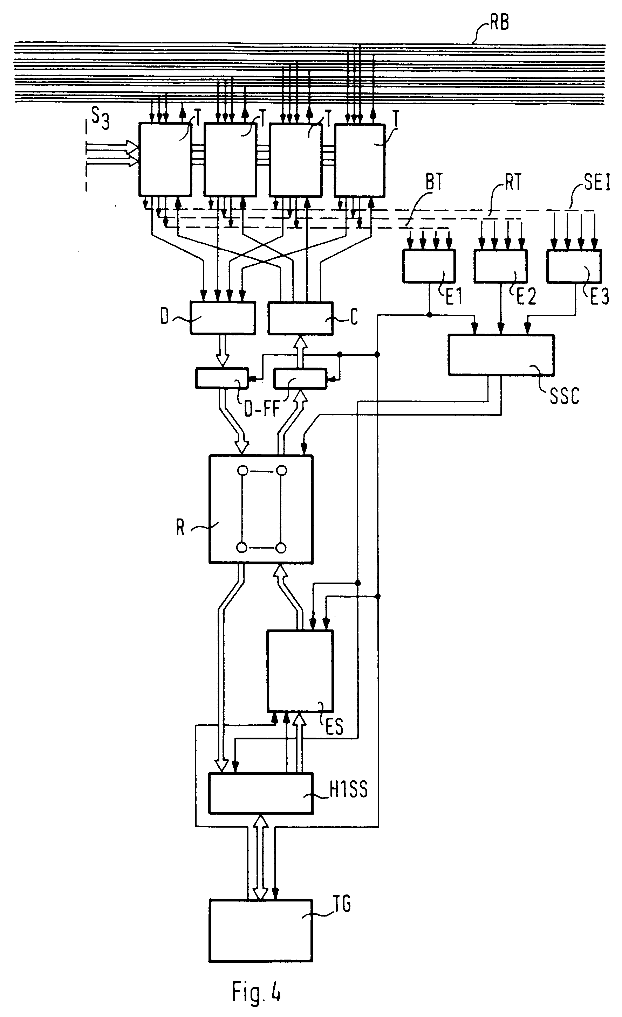

Fig. 4 zeigt eine weitere Ausführungsform für das Konzentrator-Modul C, bei welcher auch dieses entsprechend wie die Vermittlungseinrichtung nach dem bekannten (4,2)-Konzept geschützt ist. Bei dieser Ausführungsform bestehen die zentrale Vermittlungseinrichtung und die Übertragungseinrichtung eines Highways H₂ aus vier unabhängigen Ausfalleinheiten. Dementsprechend enthält der Konzentrator-Modul C in dieser Umgebung vier modifizierte Schnittstellenschaltungen H2i und vier interne Bussysteme RB an die vier bidirektionale Zeitstufen T angeschlossen sind. Die vier Zeitstufen T sind wegen des (4,2)-Konzepts parallel eingesetzt. Die Decodierung erfolgt in dem Decoder D im Anschluß an die Vermittlung der Daten.

Wie bereits vorstehend erläutert kann die Konzentrator-Zeitstufe T alle 68 Zeitschlitze erreichen, von denen im zentralen Breitband-Koppelfeld Z nur 64 vermittelt werden können. In einem der vier freien Zeitschlitze kann somit ein zentral erzeugtes Freizeichen übertragen und an einen beliebigen Teilnehmer vermittelt werden. Ein bestimmter Zeitschlitz trägt die Einstellinformation in Form eines Datenstroms, vorzugsweise zur Darstellung eines Logisch-0-Pegels viermal Logisch-0-Pegel bzw. zur Darstellung eines Logisch-1-Pegels viermal Logisch-1-Pegel. Damit ist eine einheitliche Informationsdarstellung für alle vier (4,2)-Scheiben entsprechend dem (4,2)-Konzept möglich.

Aus Bittakt BT bzw. Worttakt und Rahmentakt RT aller vier Konzentrator-Zeitstufen T wird mittels Entscheidungsschaltungen E1 bzw. E2 eine Majoritätsentscheidung abgeleitet und als "gemittelte" Takte zur Teilnehmergruppen-Schaltung T geschaltet. Ein spezielles Signal SEI dient dazu, bei nicht vermittelten Zeitschlitzen ein Raumkoppelfeld derart zu schalten, daß entweder die Datendurchschaltung aufgetrennt oder eine Testschleife gebildet wird. Die zugehörige Steuereinrichtung für das Raumkoppelfeld ist in Fig. 4 mit SSC bezeichnet. Dieses Raumkoppelfeld R trennt ebenfalls rahmentaktgesteuert die Zeitschlitze 0 (ISDN-NB-Daten) und Zeitschlitze 1 (eventuelle Verteildienste) auf der Teilnehmergruppen-Leitung von dem breitbandigen Datenstrom ab. Von der Funktionsweise kann das Raumkoppelfeld R mit dem Schalter S (in Fig. 3) gleichgesetzt werden. In einer weiteren, in der Zeichnung nicht dargestellten Schalterstellung können die Fehlerzählerstände des (4,2)-Fehlerdecoders zum zentralen Breitband-Koppelfeld Z in den nicht genutzten Zeitschlitzen 0 und 1 zurückgegeben und ausgewertet werden. Mittels des D-Flip-Flop D-FF wird der Datenfluß in der Rahmenphase an das Verzögerungsglied V angepaßt (Verringerung der Akkumulation des propagation delay).

Wie aus der vorstehenden Beschreibung hervorgeht, sind die Konzentrator-Zeitstufen T weitgehend identisch mit den anhand Fig. 3 beschriebenen Konzentrator-Modulen C. Als Unterschied ist festzuhalten:
- die vorgesehenen Speicherbänke haben entsprechend dem (4,2)-Konzept nur eine Tiefe von vier Bit (statt acht Bit).
- statt an der Schnittstelle S₂ endet die Konzentrator-Zeitstufe T bereits an der Schnittstelle S₄. (vgl. Fig. 3)

An der Schnittstelle S₄ werden die Coder bzw. Decoder C bzw. D eingefügt um den (4,2)-geschützten Bereich abzuschließen. Außerhalb dieses Bereichs entspricht die Schaltung in Fig. 4 der in Fig. 3 dargestellten Schaltung zwischen den Schnittstellen S₄ und S₂.

Bei einer Ausgestaltung des Konzentrators K nach dem (4,2)-Konzept sind vier Schnittstellenschaltungen H2i notwendig. Diese bilden das Interface zwischen einem der vier Bussysteme RB und einem der vier "Teil-Highways" H₂. Die Konzentrator-Zeitstufen T müssen exakt synchron laufen, damit die Coder C und Decoder D hinsichtlich ihrer Funktion fehlerfrei laufen. Hierzu müssen die vier Schnittstellenschaltungen H2i die ihnen zugeordneten Bussysteme RB mit synchronen Rahmen- und Bittakten RT und BT versorgen.

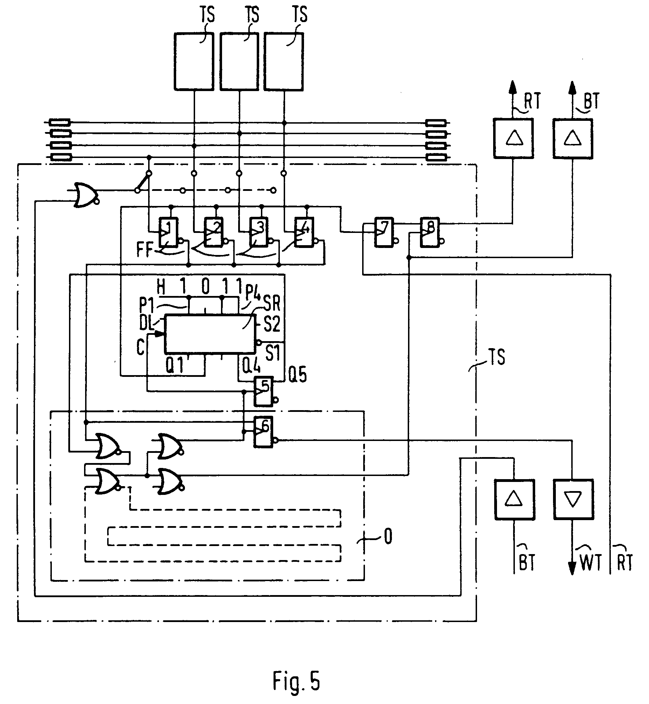

Anhand Fig. 5 wird im folgenden eine Schaltung beschrieben, welche aus den vier kommenden Takten einen einzigen Takt generiert und den Ausfall eines kommenden Takts toleriert. Die Taktsynchronisationsschaltung TS besteht aus einem freilaufende Start-Stop-Oszillator O mit entsprechenden Tor- und Triggerschaltungen. Der mit 70 MHz freilaufende Start-Stop-Oszillator O wird aus Einzelgattern und einer einstellbaren Delay-Line (mit einer Verzögerungszeit von 7 ns) realisiert. Hierbei ist die Frequenz als Optimum etwas höher einzustellen, als der vierfache Worttakt (von beispielsweise 69,632 MHz). Damit ist gewährleistet, daß vier generierte Taktpulse exakt in einen Worttakt passen mit einer kleinen Austastlücke am Schluß, die jedoch keinen Einfluß auf die Datenverarbeitung hat.

Gestartet wird der Oszillator O durch eines von vier Flip-Flops FF, wobei jedes von je einer Schnittstellenschaltung H2i (Scheibe) getriggert wird. Diese Triggersignale werden über das interne Bussystem RB auf alle vier Schnittstellenschaltungen H2i gegeben, wobei die eingezeichnete Brücke zur Taktverkopplung in jeder Schnittstellenschaltung H2i anders zu wählen ist.

Der erste ankommende Takt einer Schnittstellenschaltung H2i startet den Oszillator O. Mit dem Oszillator O und dem Setzeingang der Flip-Flops FF ist ein Schieberegister SR verbunden, welchem die Bitfolge 1011 zugeführt wird. Durch diese Wahl der Bitfolge werden nach dem zweiten Takt die vier Flip-Flop FF wieder in ihren Ausgangszustand gebracht und so zur nächsten Taktsynchronisation vorbereitet. Erscheint nach drei Takten ein Signal mit dem Logisch-0-Pegel am Ausgang Q5, so wird das Schieberegister SR im vierten Takt wieder mit der Bitfolge 1011 geladen und hält damit den Oszillator O wieder an. Der kommende Rahmentakt RT wird mit dem Setzpuls der Flip-Flops FF zwischengespeichert und mit dem ersten 70 MHz-Takt synchronisiert und zum Bussystem RB weitergereicht. Der Startimpuls des Oszillators O wird mit dem ersten Takt zwischengespeichert und als Rückwärtsworttakt wieder zum zentralen Breitband-Koppelfeld Z zurückgegeben.

## Patentansprüche

1. Vorfeldeinrichtung für ein Breitband-Vermittlungssystem mit einem Breitband-Koppelfeld (Z) und mehreren Teilnehmergruppen-Schaltungen (TG), bestehend aus wenigstens einem Breitband-Konzentrator (K),
dadurch gekennzeichnet,
daß der Breitband-Konzentrator (K) eine Schnittstellenschaltung (H2i) enthält, welche über eine Multiplexverbindung (H2) mit dem Breitband-Koppelfeld (Z) gekoppelt ist, daß der Breitband-Konzentrator (K) ein internes Bussystem (RB) zur Übertragung von Daten (DA, DE) und Takten (BT, RT) zwischen der Schnittstellenschaltung (H2i) und mehreren Konzentrator-Modulen (C) enthält, die in Verbindung mit den Teilnehmergruppen-Schaltungen (TG) stehen,
daß jeder Konzentrator-Modul (C) eine gedoppelte Speicherbank (A) zur Zwischenspeicherung von vom internen Bussystem (RB) eingeschriebenen Daten und eine gedoppelte Speicherbank (B) zur Zwischenspeicherung von zum internen Bussystem (RB) auszulesenden Daten enthält und
daß abwechselnd ein Teil einer gedoppelten Speicherbank (A, B) zum Einschreiben und der andere Teil zum Auslesen von Daten vorgesehen ist.

2. Vorfeldeinrichtung nach Anspruch 1,
dadurch gekennzeichnet,
daß die eine Speicherbank (A) zum zähleradressierten Einschreiben der Daten vom internen Bussystem (RB) mit einem Takt und eine Steuerschaltung (ST) im Konzentrator-Modul (C) zum adressierten Auslesen der Daten der einen Speicherbank (A) mit einem um einen geradzahligen Faktor untersetzten Takt vorgesehen ist und
daß die Steuerschaltung (ST) zum adressierten Einschreiben der Daten in die andere Speicherbank (B) mit dem um den geradzahligen Faktor untersetzen Takt und die andere Speicherbank (B) zum zähleradressierten Auslesen der Daten zum internen Bussystem (RB) mit dem Takt vorgesehen ist.

3. Vorfeldeinrichtung nach Anspruch 1 oder 2,
dadurch gekennzeichnet,
daß das Konzentrator-Modul (C) zwischen internem Bussystem (RB) und der einen Speicherbank (A) einen Serien-Parallel-Wandler (S/P) und zwischen internem Bussystem (RB) und der anderen Speicherbank (B) einen Parallel-Serien-Wandler (P/S) enthält und
daß Daten zwischen den Speicherbänken (A, B) und einer im Konzentrator-Modul (C) enthaltenen H1-Schnittstellenschaltung (H1SS), die mit wenigstens einer zu einer Teilnehmergruppen-Schaltung (TG) führenden H1-Multiplexverbindung gekoppelt ist, übertragen werden.

4. Vorfeldeinrichtung nach einem der vorhergehenden Ansprüche, dadurch gekennzeichnet,
daß im Konzentrator-Modul (C) eine Bus-Zugriffsschaltung (B-SE) angeordnet ist, welche zur Steuerung des Zugriffs der Konzentrator-Module (C) auf das Bussystem (RB) vorgesehen ist.

5. Vorfeldeinrichtung nach einem der vorhergehenden Ansprüche, dadurch gekennzeichnet,
daß im Konzentrator-Modul (C) eine Schleifenschaltung (S-OE) angeordnet ist, welche zur Steuerung eines mit den zwei Speicherbänken (A, B) verbundenen Schalters (S) vorgesehen ist.

6. Vorfeldeinrichtung nach einem der vorhergehenden Ansprüche, dadurch gekennzeichnet,
daß mit der H1-Schnittstellenschaltung (H1SS) und mit dem Schalter (S) ein elastischer Speicher (ES) verbunden ist.

7. Vorfeldeinrichtung nach einem der Ansprüche 3 bis 6,
dadurch gekennzeichnet,
daß die H1-Schnittstellenschaltung (H1SS) bei nicht belegtem Zeitkanal zur Übertragung eines Freizeichens in Richtung der Teilnehmergruppen-Schaltung (TG) vorgesehen ist.

8. Vorfeldeinrichtung nach einem der vorhergehenden Ansprüche, dadurch gekennzeichnet,
daß zwischen den Speicherbänken (A, B) ein Verzögerungsglied (V) angeordnet ist.

9. Vorfeldeinrichtung nach Anspruch 8,
dadurch gekennzeichnet,
daß als Verzögerungsglied (V) eine Kette von D-Flip-Flops verwendet wird.

10. Vorfeldeinrichtung nach einem der vorhergehenden Ansprüche, dadurch gekennzeichnet,
daß diese nach dem an sich bekannten (n, k)-Konzept ausgelegt ist und
daß diese k Schnittstellenschaltungen (H2i) und k interne Bussysteme (RB) aufweist.

11. Vorfeldeinrichtung nach Anspruch 10,
dadurch gekennzeichnet,
daß Konzentrator-Zeitstufen (T) vorgesehen sind, welche mit dem internen Bussystem (RB) verbunden sind.

12. Vorfeldeinrichtung nach Anspruch 11,
dadurch gekennzeichnet,
daß mit dem internen Bussystem (RB) eine Taktsynchronisationsschaltung (TS) verbunden ist, welche aus einem freilaufenden Start-Stop-Oszillator (O) und mit diesem verbundenen Tor- und Triggerschaltungen besteht.

13. Vorfeldeinrichtung nach Anspruch 12,
dadurch gekennzeichnet,
daß der Oszillator (O) eine einstellbare Delay-Line aufweist und daß der Oszillator (O) durch eines von vier mit dem Bussystem (RB) verbundenen Flip-Flop (FF) getriggert wird.

14. Vorfeldeinrichtung nach Anspruch 13,
dadurch gekennzeichnet,
daß mit dem Oszillator (O) und den Setz-Eingang der Flip-Flops (FF) ein schieberegister (SR) verbunden ist, welchem die Bitfolge "1011" zugeführt wird.

## Claims

1. Apparatus for shared lines for a broadband switching system having a broadband switching network (Z) and a plurality of subscriber group circuits (TG), the apparatus comprising at least one broadband concentrator (K), characterized in that the broadband concentrator (K) includes an interface circuit (H₂ᵢ) which is coupled to the broadband switching network (Z) via a multiplex link (H2), in that the broadband concentrator (K) includes an internal bus system (RB) for transmitting data (DA, DE) and clocks (BT, RT) between the interface circuit (H₂ᵢ) and a plurality of concentrator modules (C) connected to the subscriber group circuits (TG), in that each concentrator module (C) comprises a dual memory bank (A) for buffering data written via the internal bus system (RB) and a dual memory bank (B) for buffering data to be read out via the internal bus system (RB) and in that, alternately, one part of a dual memory bank (A,B) is provided for writing and the other part for reading the data.

2. Apparatus for shared lines as claimed in Claim 1, characterized in that a first memory bank (A) is provided to write with a first clock the data coming from the internal bus system (RB) at the counter addresses, and a control circuit (ST) in the concentrator module (C) is provided to read out the data from the first memory bank (A) with a clock that is an integer factor lower, and in that the control circuit (ST) is provided to write the data at addresses in a second memory bank (B) with the clock that is lowered by the integer factor, and in that the second memory bank (B) is provided to read out the data from the counter addresses to the internal bus system (RB) with the first clock.

3. Apparatus for shared lines as claimed in Claim 2, characterized in that the concentrator module (C) comprises a serial-to-parallel converter (S/P) between the internal bus system (RB) and the first memory bank (A) and a parallel-to-serial converter (P/S) between the internal bus system (RB) and the second memory bank (B), and in that data are transmitted between the memory banks (A,B) and an H1-interface circuit (H1SS) included in the concentrator module (C), which interface circuit is coupled to at least one H1-multiplex link leading to a subscriber group circuit (TG).

4. Apparatus for shared lines as claimed in one of the preceding Claims, characterized in that a bus access circuit (B-SE) is arranged in the concentrator module (C), which access circuit controls the access of the concentrator module (C) to the bus system (RB).

5. Apparatus for shared lines as claimed in one of the preceding Claims, characterized in that a loop circuit (S-OE) is arranged in the concentrator module (C), which loop circuit controls a switch (S) connected to the two memory banks (A,B).

6. Apparatus for shared lines as claimed in one of the preceding Claims, characterized in that an elastic store (ES) is connected to the H1 interface circuit (H1SS) and the switch (5).

7. Apparatus for shared lines as claimed in one of the Claims 3 to 6, characterized in that the H1-interface circuit (H1SS) is arranged for transmitting a free signal in the direction of the subscriber group circuit (TG) if the time channel is not occupied.

8. Apparatus for shared lines as claimed in one of the preceding Claims, characterized in that a delay element (V) is inserted between the memory banks (A,B).

9. Apparatus for shared lines as claimed in Claim 8, characterized in that a series of D-flip-flops are used as a delay element (V).

10. Apparatus for shared lines as claimed in one of the preceding Claims, characterized in that this apparatus is arranged according to the (n,k)-concept known per se and in that this apparatus comprises k interface circuits (H₂ᵢ) and k internal bus systems (RB).

11. Apparatus for shared lines as claimed in Claim 10, characterized in that concentrator time stages (T) are provided which are connected to the internal bus system (RB).

12. Apparatus for shared lines as claimed in Claim 11, characterized in that a clock synchronization circuit (TS) is connected to the internal bus system (RB), which synchronization circuit comprises a free-running start-stop oscillator (O) and gate and trigger circuits connected to this oscillator.

13. Apparatus for shared lines as claimed in Claim 12, characterized in that the oscillator (O) has an adjustable delay line and in that the oscillator (O) is triggered by one of the four flip-flops (FF) connected to the bus system (RB).

14. Apparatus for shared lines as claimed in Claim 13, characterized in that a shift register (SR) to which is applied the bit sequence "1011" is connected to the oscillator (0) and the set input of the flip-flops (FF).

## Revendications

1. Dispositif de concentration pour un système de commutation à large bande comportant une matrice de commutation à large bande (Z) et plusieurs circuits de groupes d'abonnés (TG) constitués d'au moins un concentrateur à large bande (K), caractérisé en ce que le concentrateur à large bande (K) contient un circuit d'interface (H2i), qui est couplé via une liaison multiplex (H2) à une matrice de commutation à large bande (Z), le concentrateur à large bande (K) contient un système de bus interne (RB) pour transmettre des données (DA, DE) et des cadences (BT, RT) entre le circuit d'interface (H2i) et plusieurs modules concentrateurs (C) qui sont en liaison avec les circuits de groupes d'abonnés (TG), chaque module concentrateur (C) contient une bloc de mémoire double (A) pour stocker temporairement des données écrites à partir du système de bus interne (RB) et un bloc de mémoire double (B) pour stocker temporairement des données à lire vers le système de bus interne (RB), et, en alternance, une partie d'un bloc de mémoire double (A, B) est prévue pour écrire et l'autre partie pour lire les données.

2. Dispositif de concentration selon la revendication 1, caractérisé en ce qu'un bloc de mémoire (A) est prévu pour écrire des données, par adressage de compteurs, à partir du système de bus interne (RB) avec une cadence et un circuit de commande (ST) dans le module concentrateur (C) est prévu pour effectuer une lecture adressée des données du premier bloc de mémoire (A) avec une cadence démultipliée d'un facteur pair et que le circuit de commande (ST) est prévu pour l'écriture adressée des données dans l'autre bloc de mémoire (B) avec la cadence démultipliée du facteur pair et l'autre bloc de mémoire (B) est prévu pour la lecture adressée par compteur des données vers le système de bus interne (RB) avec la cadence.

3. Dispositif de concentration selon la revendication 1 ou 2, caractérisé en ce que le module concentrateur (C) contient entre le système de bus interne (RB) et le premier bloc de mémoire (A) un convertisseur série-parallèle (S/P) et entre le système de bus interne (RB) et l'autre bloc de mémoire (B) un convertisseur parallèle-série (P/S) et les données sont transmises entre les blocs de mémoire (A, B) et un circuit d'interface (H1SS) contenu dans le module concentrateur (C), qui est couplé à au moins une liaison multiplex H1 menant à un circuit de groupe d'abonnés (TG).

4. Dispositif de concentration selon l'une quelconque des revendications précédentes, caractérisé en ce que l'on agence dans le module concentrateur (C) un circuit d'accès au bus (B-SE) qui est prévu pour commander l'accès du module concentrateur (C) au système de bus (RB).

5. Dispositif de concentration selon l'une quelconque des revendications précédentes, caractérisé en ce que l'on agence dans le module concentrateur (C) un circuit à boucle (S-OE) qui est prévu pour commander un commutateur (S) connecté aux deux blocs de mémoire (A, B).

6. Dispositif de concentration selon l'une quelconque des revendications précédentes, caractérisé en ce qu'une mémoire élastique (ES) est reliée au circuit d'interface H1 (H1SS) et au commutateur (S).

7. Dispositif de concentration selon l'une quelconque des revendications 3 à 6, caractérisé en ce que le circuit d'interface H1 (H1SS) est prévu, lorsque le canal de temps n'est pas occupé, pour transmettre un signal de ligne libre dans la direction du circuit de groupe d'abonnés (TG).

8. Dispositif de concentration selon l'une quelconque des revendications précédentes, caractérisé en ce qu'un circuit de temporisation (V) est agencé entre les blocs de mémoire (A, B).

9. Dispositif de concentration selon la revendication 8, caractérisé en ce que l'on utilise comme circuit de temporisation (V) une chaîne de bascules D.

10. Dispositif de concentration selon l'une quelconque des revendications précédentes, caractérisé en ce que ce dispositif est conçu selon le concept (n, k) connu en soi et il présente k circuits d'interface (H2i) et k systèmes de bus interne (RB).

11. Dispositif de concentration selon la revendication 10, caractérisé en ce que des étages de temps de concentrateurs (T) sont prévus et sont reliés au système de bus interne (RB).

12. Dispositif de concentration selon la revendication 11, caractérisé en ce qu'au système de bus interne (RB) est connecté un circuit de synchronisation de cadence (TS) qui est constitué d'un oscillateur marche-arrêt à fonctionnement libre (O) et de circuits-portes et cricuits de déclenchement connectés à celui-ci.

13. Dispositif de concentration selon la revendication 12, caractérisé en ce que l'oscillateur (O) présente une ligne à retard réglable et l'oscillateur (O) est déclenché par une de quatre bascules connectées au système de bus (RB).

14. Dispositif de concentration selon la revendication 13, caractérisé en ce qu'à l'oscillateur (O) et à l'entrée de positionnement de la bascule (FF) est connecté un registre à décalage (SR) auquel la séquence de bits "1011" est acheminée.
